(19) Europäisches Patentamt
European Patent Office
Office européen des brevets

(11) EP 3 115 404 B1

(12) # EUROPÄISCHE PATENTSCHRIFT

(45) Veröffentlichungstag und Bekanntmachung des Hinweises auf die Patenterteilung:
**31.01.2018 Patentblatt 2018/05**

(51) Int Cl.:
***C08K 3/22*** *(2006.01)*
***C08K 3/38*** *(2006.01)*
***C08K 3/40*** *(2006.01)*
***C08K 5/103*** *(2006.01)*

(21) Anmeldenummer: **15175787.9**

(22) Anmeldetag: **08.07.2015**

(54) **BORNITRID-HYBRIDMATERIAL-HALTIGE THERMOPLASTISCHE ZUSAMMENSETZUNG**

THERMOPLASTIC COMPOSITION CONTAINING BORON NITRIDE HYBRID MATERIAL

COMPOSITION THERMOPLASTIQUE CONTENANT UNE MATIERE HYBRIDE A BASE DE NITRURE DE BORE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.01.2017 Patentblatt 2017/02**

(73) Patentinhaber: **Covestro Deutschland AG**
**51373 Leverkusen (DE)**

(72) Erfinder:
- **Sämisch, Birte**
**50670 Köln (DE)**
- **Wehrmann, Rolf**
**47800 Krefeld (DE)**
- **Heuer, Helmut Werner**
**51371 Leverkusen (DE)**
- **Kuhlmann, Timo**
**42799 Leichlingen (DE)**

(74) Vertreter: **Levpat**
**c/o Covestro AG**
**Gebäude 4825**
**51365 Leverkusen (DE)**

(56) Entgegenhaltungen:
**JP-A- 2010 150 470**
**US-A1- 2008 153 959**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 115 404 B1

## Beschreibung

Die vorliegende Erfindung betrifft thermisch leitfähige, Bornitrid-haltige Polymerzusammensetzungen mit guter Fließfähigkeit und gleichzeitig guter Wärmeformbeständigkeit.

Herkömmlich wird bei thermoplastischen Zusammensetzungen zur Fließverbesserung BDP (Bisphenol A-Diphosphat) verwendet, und zwar in Mengen von bis zu mehr als 10,0 Gew.-%, um den gewünschten Effekt zu erzielen. Durch den Zusatz von BDP in hohen Mengen wird aber die Wärmeformbeständigkeit stark herabgesetzt.

Auch andere Mittel werden zur Verbesserung der Fließfähigkeit thermoplastischer Zusammensetzungen eingesetzt. Beispielsweise beschreibt die US 2008/153959 A1 Zusammensetzungen, enthaltend ein Polymer und Bornitrid, wobei die Fließfähigkeit der Zusammensetzungen durch die Zugabe 10 Gew.-% bis 30 Gew.-% eines Graphits verbessert wird. Derartige Zusammensetzungen sind aufgrund der hohen Gehalte an Graphit und Bornitrid generell schlecht zu verarbeiten. Weiterhin sind die beanspruchten Zusammensetzungen häufig elektrisch leitend, wodurch die Verwendung der Zusammensetzungen beschränkt ist.

Die Zugabe von Graphit ist jedoch keinesfalls eine Garantie dafür, dass eine gute Fließfähigkeit erzielt werden kann. Die US 7,723,419 B1 etwa beschreibt ebenfalls thermoplastische Zusammensetzungen, enthaltend Bornitrid und Graphit mit einer Partikelgröße von etwa 55 bis 65 $\mu$m, wobei die Zusammensetzungen aufgrund der Partikelgröße des sphärischen Bornitrids eine generell ungenügende Fließfähigkeit aufweisen. Eine Verbesserung der Fließfähigkeit der beanspruchten Zusammensetzungen wird nicht thematisiert.

Weitere Mittel zur Verbesserung der Fließfähigkeit sind beispielsweise niedermolekulare Kohlenwasserstoffharze sowie Olefine, wie in der US 2012/0217434 A1 für Zusammensetzungen, enthaltend ein Polymer, einen thermisch-isolierenden Füllstoff sowie einen thermisch-leitenden Füllstoff, wobei die thermische Leitfähigkeit der Zusammensetzungen mindestens 1 W/(K*m) aufweist, beschrieben.

US 2014/077125 beschreibt eine Zusammensetzung, enthaltend Thermoplasten und in-situ hergestelltes Bornitrid sowie einen harten Füllstoff. Eine Verbesserung der Fließfähigkeit der Zusammensetzung wird nicht thematisiert.

Überraschenderweise wurde nun gefunden, dass Diglycerolester zur Verbesserung der Fließfähigkeit von Bornitrid-Hybridmaterialien-haltigen thermoplastischen Zusammensetzungen, insbesondere solcher, enthaltend Polycarbonat als einen oder einzigen Thermoplasten, geeignet sind. Diglycerolester führen im Gegensatz zu BDP nicht zu einer Herabsetzung der Wärmeformbeständigkeit.

Gegenstand der Erfindung sind daher thermoplastische Zusammensetzungen, enthaltend

(A) mindestens ein thermoplastisches Polymer,
(B) ein Bornitrid-Hybridmaterial,
(C) mindestens ein Fließhilfsmittel, ausgewählt aus der Gruppe der Diglycerolester, und
(D) gegebenenfalls mindestens einen weiteren anorganischen Füllstoff.

Die Erfindung wird weiterhin gelöst durch Formteile, insbesondere Komponenten einer elektrischen oder elektronischen Baugruppe, eines Motorenteils oder eines Wärmetauschers wie beispielsweise Lampenfassungen, Wärmesenken und Kühler bzw. Kühlkörper für Platinen, hergestellt aus einer solchen Zusammensetzung.

Die einzelnen Bestandteile der erfindungsgemäßen Zusammensetzungen sind im Folgenden noch näher erläutert:

## Komponente A

Als thermoplastisches Polymer werden amorphe und/oder semi-kristalline thermoplastische Polymere, alleine oder in Mischung, verwendet, welche ausgewählt sind aus der Gruppe der Polyamide, Polyester, Polyphenylensulfide, Polyphenylenoxide, Polysulfone, Poly(meth)acrylate, Polyimide, Polyetherimide, Polyetherketone sowie Polycarbonate. Bevorzugt werden erfindungsgemäß Polyamide oder Polycarbonate eingesetzt, ganz besonders bevorzugt Polycarbonate.

Die erfindungsgemäßen Zusammensetzungen enthalten bevorzugt 27,8 bis 90 Gew.-%, besonders bevorzugt 70 bis 90 Gew.-% thermoplastisches Polymer.

In einer Ausführungsform der vorliegenden Erfindung werden als thermoplastisches Polymer amorphe und/oder semi-kristalline Polyamide verwendet. Geeignete Polyamide sind aliphatische Polyamide, zum Beispiel PA-6, PA-11, PA-12, PA-4,6, PA-4,8, PA-4,10, PA-4,12, PA-6,6, PA-6,9, PA-6,10, PA-6,12, PA-10,10, PA-12,12, PA-6/6,6-Copolyamid, PA-6/12-Copolyamid, PA-6/11-Copolyamid, PA-6,6/11-Copolyamid, PA-6,6/12-Copolyamid, PA-6/6,10-Copolyamid, PA-6,6/6,10-Copolyamid, PA-4,6/6-Copolyamid, PA-6/6,6/6,10-Terpolyamid, und Copolyamid aus 1,4-Cyclohexandicarbonsäure und 2,2,4- und 2,4,4-Trimethylhexamethylendiamin, aromatische Polyamide, zum Beispiel PA-6,1, PA-6,1/6,6-Copolyamid, PA-6,T, PA-6,T/6-Copolyamid, PA-6,T/6,6-Copolyamid, PA-6,1/6,T-Copolyamid, PA-6,6/6,T/6,1-Copolyamid, PA-6,T/2-MPMDT-Copolyamid (2-MPMDT = 2-Methylpentamethylendiamin), PA-9,T, Copolyamid aus Terephthalsäure, 2,2,4- und 2,4,4-Trimethylhexamethylendiamin, Copolyamid aus Isophthalsäure, Laurinlactam und 3,5-Dimethyl-4,4-diaminodicyclohexylmethan, Copolyamid aus Isophthalsäure, Azelainsäure und/oder Sebacinsäure und 4,4-Diaminodicyclohexylmethan, Copolyamid aus Caprolactam, Isophthalsäure und/oder Terephthalsäure und 4,4-Diaminodicyclohexylmethan, Copolyamid aus Caprolactam, Isophthalsäure und/oder Terephthalsäure und Isophorondiamin, Copolyamid aus Isophthalsäure und/oder Terephthalsäure und/oder weiteren aromatischen oder aliphatischen Dicarbonsäuren, optional alkylsubstituiertem Hexamethylendiamin und alkylsubstituiertem 4,4-Diaminodicyclohexylamin oder deren Copolyamide sowie Mischungen zuvor genannter Polyamide.

In einer weiteren Ausführungsform der vorliegenden Erfindung werden als Komponente A semi-kristalline Polyamide verwendet, welche vorteilhafte thermische Eigenschaften aufweisen. Hierbei werden semi-kristalline Polyamide verwendet, welche einen Schmelzpunkt von mindestens 200 °C, bevorzugt von mindestens 220 °C, weiter bevorzugt von mindestens 240 °C und noch weiter bevorzugt von mindesten 260 °C aufweisen. Je höher der Schmelzpunkt der semi-kristallinen Polyamide, desto vorteilhafter ist das thermische Verhalten der erfindungsmäßen Zusammensetzungen. Der Schmelzpunkt wird mittels DSC ermittelt.

Bevorzugte semi-kristalline Polyamide sind ausgewählt aus der Gruppe, enthaltend PA-6, PA-6,6, PA-6,10, PA-4,6, PA-11, PA-12, PA-12,12, PA-6,1, PA-6,T, PA-6,T/6,6-Copolyamid, PA-6,T/6-Copolyamid, PA-6/6,6-Copolyamid, PA-6,6/6,T/6,1-Copolyamid, PA-6,T/2-MPMDT-Copolyamid, PA-9,T, PA-4,6/6-Copolyamid und deren Mischungen oder Copolyamide.

Weiter bevorzugte semi-kristalline Polyamide sind PA-6,1, PA-6,T, PA-6,6, PA-6,6/6T, PA-6,6/6,T/6,1-Copolyamid, PA-6,T/2-MPMDT-Copolyamid, PA-9,T, PA-4,6 und deren Mischungen oder Copolyamide.

Bevorzugte erfindungsgemäße Zusammensetzungen enthalten als Komponente A das Polymer PA-4,6 oder eines seiner Copolyamide.

Besonders bevorzugte erfindungsgemäße Zusammensetzungen enthalten als thermoplastisches Polymer ausschließlich Polycarbonat.

Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Die thermoplastischen Polycarbonate einschließlich der thermoplastischen, aromatischen Polyestercarbonate haben mittlere Molekulargewichte $M_w$ (ermittelt durch Messung der relativen Viskosität bei 25°C in $CH_2Cl_2$ und einer Konzentration von 0,5 g pro 100 ml $CH_2Cl_2$) von 20.000 g/mol bis 32.000 g/mol, vorzugsweise von 23.000 g/mol bis 31.000 g/mol, insbesondere von 24.000 g/mol bis 31.000 g/mol.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (2)

HO-Z-OH (2),

in welcher

Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (2) für einen Rest der Formel (3)

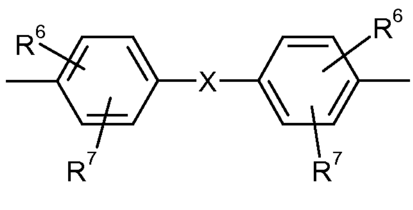

(3),

in der

$R^6$ und $R^7$ unabhängig voneinander für H, $C_1$- bis $C_{18}$-Alkyl-, $C_1$- bis $C_{18}$-Alkoxy, Halogen wie Cl oder Br oder für jeweils gegebenenfalls substituiertes Aryl- oder Aralkyl, bevorzugt für H oder $C_1$- bis $C_{12}$-Alkyl, besonders bevorzugt für H oder $C_1$- bis $C_8$-Alkyl und ganz besonders bevorzugt für H oder Methyl stehen, und

X für eine Einfachbindung, $-SO_2-$, -CO-, -O-, -S-, $C_1$- bis $C_6$-Alkylen, $C_2$- bis $C_5$-Alkyliden oder $C_5$- bis $C_6$-Cycloalkyliden, welches mit $C_1$- bis $C_6$-Alkyl, vorzugsweise Methyl oder Ethyl, substituiert sein kann, ferner für $C_6$- bis $C_{12}$-Arylen, welches gegebenenfalls mit weiteren Heteroatome enthaltenden aromatischen Ringen kondensiert sein kann, steht.

Bevorzugt steht X für eine Einfachbindung, $C_1$- bis $C_5$-Alkylen, $C_2$- bis $C_5$-Alkyliden, $C_2$- bis $C_6$-Cycloalkyliden, -O-, -SO-, -CO-, -S-, $-SO_2-$
oder für einen Rest der Formel (3a)

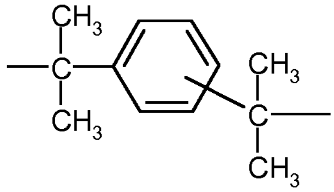

(3a).

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Diese und weitere geeignete Diphenole sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenole oder Alkylphenole, insbesondere Phenol, p-tert. Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel

zudosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1 -Tri-(4-hydroxyphenyl)-ethan, Tris-(4-hydroxyphenyl)-phenylmethan, 2,2-Bis-[4,4-bis-(4-hydroxyphenyl)-cyclohexyl] -propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

Sofern das thermoplastische Polymer gemäß Komponente A ein Polycarbonat ist, sind bevorzugt 28 bis 89,8 Gew.-% Polycarbonat, bezogen auf die Gesamtzusammensetzung, enthalten.

**Komponente B**

Als Komponente B wird erfindungsgemäß ein Bornitrid-Hybridmaterial eingesetzt. Bornitrid-Hybridmaterialien sind Kombinationsmaterialien aus Bornitrid und mindestens einer anorganischen Komponente.

Es werden erfindungsgemäß 1 Gew.-% bis 85 Gew.-%, bevorzugt 15 Gew.-% bis 72 Gew.-% an Bornitrid-Hybridmaterial in den Zusammensetzungen verwendet. Dabei beträgt der Anteil an Bornitrid bevorzugt 9 bis 35, ganz besonders bevorzugt bis 25 Gew.-%, bezogen auf die gesamte thermoplastische Zusammensetzung.

Das in den Bornitrid-Hybridmaterialien verwendete Bornitrid kann ein kubisches Bornitrid, ein hexagonales Bornitrid, ein amorphes Bornitrid, ein partiell kristallines Bornitrid, ein turbostratisches Bornitrid, ein wurtzitisches, ein rhomboedrisches Bornitrid und/oder eine weitere allotrope Form beinhalten, wobei die hexagonale Form bevorzugt ist.

Die Herstellung von Bornitrid ist beispielsweise in den Schriften US 6,652,822 B2, US2001/0021740 A1, US 5,898,009 A, US 6,048,511 A, US 2005/0041373 A1, US 2004/0208812 A1, US 6,951,583 B2 sowie in WO 2008/042446 A2 beschrieben.

Das Bornitrid wird in Form von Plättchen, Pulvern, Nanopulvern, Fasern sowie Agglomeraten oder einer Mischung zuvor genannter Formen verwendet.

Bevorzugt wird eine Mischung aus diskretem plättchenförmigen Bornitrid und Agglomeraten genutzt.

Ebenfalls bevorzugt werden Bornitride mit einer agglomerierten Partikelgröße (D(0,5)-Wert) von 1 $\mu$m bis 100 $\mu$m, bevorzugt von 3 $\mu$m bis 60 $\mu$m, besonders bevorzugt von 5 $\mu$m bis 30 $\mu$m, ermittelt durch Laserbeugung, genutzt.

Bei der Laserbeugung werden Partikelgrößenverteilungen durch Messung der Winkelabhängigkeit der Intensität von gestreutem Licht eines Laserstrahls, der eine dispergierte Partikelprobe durchdringt, ermittelt. Hierbei wird die Mie-Theorie der Lichtstreuung zur Berechnung der Partikelgrößenverteilung verwendet. Der D(0,5)-Wert bedeutet, dass 50 Vol.-% aller vorkommenden Partikel in dem untersuchten Material kleiner sind als der angegebene Wert.

In einer weiteren Ausführungsform der vorliegenden Erfindung werden Bornitride mit einem D(0,5) -Wert von 0,1 μm bis 50 μm, bevorzugt von 1 μm bis 30 μm, besonders bevorzugt von 3 μm bis 20 μm genutzt.

Bornitride werden mit unterschiedlichen Partikelgrößenverteilungen in den erfindungsmäßen Zusammensetzungen eingesetzt. Die Partikelgrößenverteilung wird hierbei als Quotient aus D(0,1)-Wert und D(0,9)-Wert beschrieben.

Verwendung finden Bornitride mit einem D(0,1)/D(0,9) - Verhältnis von 0,0001 bis 0,4, bevorzugt von 0,001 bis 0,2. Besonders bevorzugt werden Bornitride mit einem D(0,1)/D(0,9) - Verhältnis von 0,01 bis 0,15 eingesetzt, was einer sehr engen Verteilung entspricht.

In einer weiteren Ausführungsform der vorliegenden Erfindung werden zwei Bornitride mit unterschiedlicher Partikelgrößenverteilung genutzt, wodurch eine bimodale Verteilung in der Zusammensetzung entsteht.

Bei der Verwendung von hexagonalem Bornitrid werden Plättchen mit einem Aspekt-Verhältnis (mittlerer Plättchendurchmesser dividiert durch Plättchendicke) von ≥ 2, bevorzugt ≥ 5, besonders bevorzugt ≥ 10 genutzt.

Der Kohlenstoffgehalt der verwendeten Bornitride beträgt ≤ 1 Gew.-%, bevorzugt ≤ 0,5 Gew.-%, besonders bevorzugt ≤ 0,1 Gew.-% und ganz besonders bevorzugt ≤ 0,05 Gew.-%.

Der Sauerstoffgehalt der verwendeten Bornitride beträgt ≤ 1 Gew.-%, bevorzugt ≤ 0,5 Gew.-% und besonders bevorzugt ≤ 0,4 Gew.-%.

Der Anteil an löslichen Boraten in den verwendeten Bornitriden liegt zwischen 0,01 Gew.-% und 1,00 Gew.-%, bevorzugt zwischen 0,05 Gew.-% und 0,50 Gew.-% und besonders bevorzugt zwischen 0,10 Gew.-% und 0,30 Gew.-%.

Die Reinheit der Bornitride, das heißt, der Anteil an reinem Bornitrid in dem jeweils genutzten Zuschlagstoff, beträgt mindestens 90 Gew.-%, bevorzugt mindestens 95 Gew.-% und weiterhin bevorzugt mindestens 98 Gew.-%.

Die erfindungsgemäß verwendeten Bornitride weisen eine Oberfläche, ermittelt nach dem BET (S. Brunauer, P. H. Emmett, E. Teller) - Bestimmungsverfahren nach DIN-ISO 9277 (DIN-ISO 9277:2014-01), von 0,1 $m^2/g$ bis 25 $m^2/g$, bevorzugt 1,0 $m^2/g$ bis 10 $m^2/g$ und besonders bevorzugt 3 $m^2/g$ bis 9 $m^2/g$ auf.

Die Schüttdichte der Bornitride beträgt vorzugsweise ≤ 1 $g/cm^3$, besonders bevorzugt ≤ 0,8 $g/cm^3$ und ganz besonders bevorzugt ≤ 0,6 $g/cm^3$.

Bei dem anorganischen Material des Hybridmaterials handelt es sich um eines aus der Gruppe der Metalloxide, Metallcarbide, Metallnitride oder Metallboride oder Kombinationen dieser. Typischerweise kommen Aluminiumoxid, Titandioxid, Magnesiumoxid, Berylliumoxid, Yttriumoxid, Hafniumoxid, Ceroxid, Zinkoxid, Siliciumcarbid, Titancarbid, Borcarbid, Zirkoniumcarbid, Aluminiumcarbid, Titanwolframcarbid, Tantalcarbid, Aluminiumnitrid, Magnesiumsiliciumnitrid, Titannitrid, Siliciumdioxid, insbesondere Quarz, Siliciumnitrid, Zirconiumborid, Titandiborid, Glasfüllstoff und/oder Aluminiumborid zum Einsatz.

Bevorzugt werden Siliciumdioxid und/oder Zinkoxid, ganz besonders bevorzugt wird Zinkoxid eingesetzt.

Des Weiteren kommen Silikate, Alumosilikate, Titanate, Mica, Kaoline, kalzinierter Kaolin, Talk, Kalcit, Wollastonit, Ton, Magnesiumcarbonat, Calciumcarbonat, Chalkogenide, Kieselerde, kalzinierte Kieselerde, kryptokristalline Kieselsäure, Zinksulfit, Zeolithe, Bariumsulfat und/oder Calciumsulfat und Kombinationen dieser Füllstoffe zum Einsatz.

Zusätzlich können die Bornitrid-Materialien außerdem einen Glasfüllstoff enthalten.

Die Glasfüllstoffe bestehen aus einer Glaszusammensetzung, ausgewählt aus der Gruppe der M-, E-, A-, S-, R-, AR-, ECR-, D-, Q- oder C-Gläser, wobei E-, S- oder C-Glas weiter bevorzugt sind.

Die Glaszusammensetzung kann in Form von Glasmassivkugeln, Glashohlkugeln, Glasperlen, Glasflakes, Glasbruch sowie Glasfasern eingesetzt werden, wobei die Glasfasern weiter bevorzugt sind.

Die Glasfasern können in Form von Endlosfasern (rowings), Schnittglasfasern, gemahlenen Glasfasern, Glasfasergeweben oder Mischungen der vorgenannten Formen eingesetzt werden, wobei die Schnittglasfasern sowie die gemahlenen Glasfasern bevorzugt eingesetzt werden.

Besonders bevorzugt werden gemahlene Glasfasern eingesetzt.

Die bevorzugte Faserlänge der Schnittglasfasern beträgt vor der Compoundierung 0,5 bis 10 mm, weiter bevorzugt 1,0 bis 8 mm, ganz besonders bevorzugt 1,5 bis 6 mm.

Schnittglasfasern können mit unterschiedlichen Querschnitten eingesetzt werden. Bevorzugt werden runde, elliptische, ovale, 8-förmige und flache Querschnitte eingesetzt, wobei die runden, ovalen sowie flachen Querschnitte besonders bevorzugt sind.

Der Durchmesser von Rundfasern beträgt bevorzugt 5 bis 25 μm, weiter bevorzugt 6 bis 20 μm, besonders bevorzugt 7 bis 17 μm.

Bevorzugte Flach- und Ovalglasfasern weisen ein Querschnittverhältnis aus Höhe zu Breite von ca. 1,0:1,2 bis 1,0:8,0, bevorzugt 1,0:1,5 bis 1,0:6,0, besonders bevorzugt 1,0:2,0 bis 1,0:4,0 auf.

Die Flach- und Ovalglasfasern weisen weiterhin eine durchschnittliche Faserhöhe von 4 μm bis 17 μm, bevor-

zugt von 6 µm bis 12 µm und besonders bevorzugt 6 µm bis 8 µm sowie eine durchschnittliche Faserbreite von 12 µm bis 30 µm, bevorzugt 14 µm bis 28 µm und besonders bevorzugt 16 µm bis 26 µm auf.

Die verwendeten Glasfasern zeichnen sich dadurch aus, dass die Auswahl der Faser nicht durch die Wechselwirkungscharakteristik der Faser mit der Polycarbonatmatrix beschränkt ist.

Eine starke Anbindung der Glasfaser an die Polymermatrix ist an den Tieftemperaturbruchoberflächen bei rasterelektronenmikroskopischen Aufnahmen zu erkennen, wobei die größte Anzahl der gebrochenen Glasfasern auf derselben Höhe wie die Matrix gebrochen sind und nur vereinzelt Glasfasern aus der Matrix herausstehen. Rasterelektronenmikroskopische Aufnahmen zeigen für den umgekehrten Fall der nicht-anbindenden Charakteristik, dass die Glasfasern im Tieftemperaturbruch aus der Matrix stark herausstehen oder vollständig herausgeglitten sind.

In den Bornitrid-Hybridmaterialien werden gemahlene Glasfasern in Gehalten von bevorzugt 5,0 - 50,0 Gew.-%, besonders bevorzugt von 10,0 - 30,0 Gew.-% und ganz besonders bevorzugt 15,0 - 25,0 Gew.-% verwendet.

Weiterhin können die Bestandteile der Bornitrid-Hybridmaterialien an der Oberfläche modifiziert sein oder ein separater Stoff kann einer Mischung aus Bornitrid und weiteren Füllstoffen zugefügt werden, wodurch die Verträglichkeit der Füllstoffe mit der erfindungsmäßen Zusammensetzung erhöht wird. Geeignete Modifikatoren sind unter anderen organische, wie bspw. Siliciumorganische Verbindungen.

Die Bornitrid-Hybridmaterialien weisen bevorzugt eine Schlichte auf.

Die Beschlichtung der Bornitrid-Hybridmaterialien erfolgt nach den allgemeinen, dem Fachmann bekannten Verfahren.

Die Schlichten bestehen aus Silicium-organischen Verbindungen, wobei bevorzugt Acryloxy-, Methacryloxy-, Vinyl-, Halogen-funktionalisierte-, Mercapto-, Thiocarboxylat- und/oder Sulfanyl-Silane zum Einsatz kommen. Bevorzugt werden hierbei Thiocarboxylatsilane eingesetzt.

Beispiele für kommerziell verwendbare Schlichten sind NXT Silane der Firma Momentive Performance Materials.

Sofern Glasfasern eingesetzt werden, sind diese bevorzugt an der Oberfläche modifiziert. Bevorzugte Glasschlichten sind Epoxy-modifizierte, Polyurethan-modifizierte und nichtmodifizierte Silanverbindungen sowie Mischungen der vorgenannten Silanverbindungen.

Bevorzugte Bornitrid-Hybridmaterialien sind solche, enthaltend

B1) 25 bis 70 Gew.-%, bevorzugt 30 bis 65 Gew.-% Bornitrid,
B2) 10 bis 70 Gew.-%, bevorzugt 15 bis 65 Gew.-% Zinkoxid,
B3) ggf. 15 bis 25 Gew.-% Glasfüllstoff,
B4) ggf. eine Schlichte, wobei sich die Mengenangaben auf das Bornitrid-Hybridmaterial beziehen.

Ein bevorzugtes Bornitrid-Hybridmaterial weist eine Zusammensetzung von 10 bis 35, weiter bevorzugt 20 bis 32 Gew.-Teilen eines Bornitrids, 60 bis 100 Gew.-Teilen einer oxidischen Keramik, bevorzugt Zinkoxid, sowie 1 bis 8, weiter bevorzugt bis 5 Gew.-Teile einer Schlichte auf.

Ein weiteres bevorzugtes Bornitrid-Hybridmaterial weist eine Zusammensetzung von 60 bis 100 Gew.-Teilen eines Bornitrids, 10 bis 30 Gew.-Teilen einer oxidischen Keramik, bevorzugt Zinkoxid, 10 bis 30 Gew.-Teilen eines Glasfüllstoff sowie 1 bis 8 Gew.-Teilen, weiter bevorzugt 1 bis 5 Gew.-Teilen einer Schlichte auf.

Die thermische Leitfähigkeit der Bornitrid-Hybridmaterial enthaltenden Zusammensetzungen beträgt üblicherweise ≥ 0,5 W/(m·K), bevorzugt ≥ 2 W/(m·K), besonders bevorzugt ≥ 3 W/(m·K).

Beispiele für kommerziell verwendbare Bornitrid-Hybridmaterialien sind CoolFX-1021, CoolFX-1022 sowie CoolFX-1035 von der Firma Momentive Performance Materials und BORON ID® Cooling Filler Flakes H30/500 von der Firma ESK Ceramics GmbH & Co. Die Herstellung von Bornitrid-Hybridmaterialien ist beispielsweise in US 2014/0077125 A1 beschrieben.

**Komponente C**

Die verwendeten Fließhilfsmittel C sind Ester von Carbonsäuren mit Diglycerol. Dabei sind Ester auf Basis verschiedener Carbonsäuren geeignet. Auch können unterschiedliche Isomere von Diglycerol Basis für die Ester bilden. Neben Monoestern können auch Mehrfachester von Diglycerol eingesetzt werden. Anstelle von Reinverbindungen können auch Gemische verwendet werden.

Isomere von Diglycerol, welche die Basis für die erfindungsgemäß eingesetzten Diglycerolester bilden, sind die folgenden:

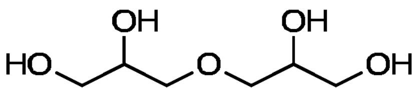 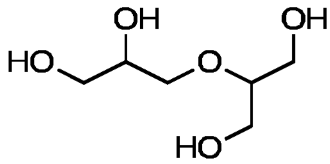 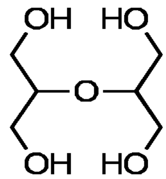

α,α-Diglycerol α,β-Diglycerol β,β-Diglycerol

Für die erfindungsgemäß verwendeten Diglycerolester können solche Isomere dieser Formeln eingesetzt werden, die einfach oder mehrfach verestert sind. Als Fließhilfsmittel einsetzbare Gemische bestehen aus den Diglyceroledukten sowie daraus abgeleiteten Esterendprodukten, beispielweise mit den Molekulargewichten 348 g/mol (Monolaurylester) oder 530 g/mol (Dilaurylester).

Die erfindungsgemäß in der Zusammensetzung enthaltenen Diglycerolester leiten sich vorzugsweise von gesättigten oder ungesättigten Monocarbonsäuren mit einer Kettenlänge von 6 bis 30 C-Atomen ab. Geeignete Monocarbonsäuren sind beispielsweise Caprylsäure ($C_7H_{15}COOH$, Octansäure), Caprinsäure ($C_9H_{19}COOH$, Decansäure), Laurinsäure ($C_{11}H_{23}COOH$, Dodecansäure), Myristinsäure ($C_{13}H_{27}COOH$, Tetradecansäure), Palmitinsäure ($C_{15}H_{31}COOH$, Hexadecansäure), Margarinsäure ($C_{16}H_{33}COOH$, Heptadecansäure), Stearinsäure ($C_{17}H_{35}COOH$, Octadecansäure), Arachinsäure ($C_{19}H_{39}COOH$, Eicosansäure), Behensäure ($C_{21}H_{43}COOH$, Docosansäure), Lignocerinsäure ($C_{23}H_{47}COOH$, Tetracosansäure), Palmitoleinsäure ($C_{15}H_{29}COOH$, (9Z)-Hexadeca-9-ensäure), Petroselinsäure ($C_{17}H_{33}COOH$, (6Z)-Octadeca-6-ensäure), Elaidinsäure ($C_{17}H_{33}COOH$, (9E)-Octadeca-9-ensäure), Linolsäure ($C_{17}H_{31}COOH$, (9Z,12Z)-Octadeca-9,12-diensäure), alpha- oder gamma-Linolensäure ($C_{17}H_{29}COOH$, (9Z,12Z,15Z)-Octadeca-9,12,15-triensäure und (6Z,9Z,12Z)-Octadeca-6,9,12-triensäure), Arachidonsäure ($C_{19}H_{31}COOH$, (5Z,8Z,11Z,14Z)-Eicosa-5,8,11,14-tetraensäure), Timnodonsäure ($C_{19}H_{29}COOH$, (5Z,8Z,11Z,14Z,17Z)-Eicosa-5,8,11,14,17-pentaensäure) und Cervonsäure ($C_{21}H_{31}COOH$, (4Z,7Z,10Z,13Z,16Z,19Z)-Docosa-4,7,10,13,16,19-hexaensäure). Besonders bevorzugt sind Laurinsäure, Palmitinsäure und/oder Stearinsäure.

Als Diglycerolester ist besonders bevorzugt mindestens ein Ester der Formel (I)

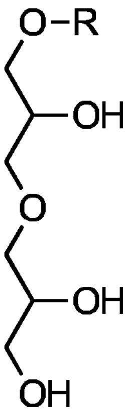 (I)

mit R = $COC_nH_{2n+1}$ und/oder R = COR',
wobei n eine ganze Zahl ist und wobei R' ein verzweigter Alkylrest oder ein verzweigter oder unverzweigter Alkenylrest ist und $C_nH_{2n+1}$ ein aliphatischer, gesättigter linearer Alkylrest ist,

enthalten.

Dabei ist n bevorzugt eine ganze Zahl von 6-24, so dass $C_nH_{2n+1}$ beispielsweise n-Hexyl, n-Heptyl, n-Octyl, n-Nonyl, n-Decyl, n-Dodecyl, n-Tridecyl, n-Tetradecyl, n-Hexadecyl oder n-Octadecyl ist. Weiter bevorzugt ist n = 8 bis 18, besonders bevorzugt 10 bis 16, ganz besonders bevorzugt 12 (Diglycerolmonolaurat-Isomer mit dem Molekulargewicht 348 g/mol, welches als Hauptprodukt in einem Gemisch besonders bevorzugt ist). Die vorgenannten Estergruppierungen liegen erfindungsgemäß bevorzugt auch bei den anderen Isomeren des Diglycerols vor.

Es kann sich demzufolge auch um ein Gemisch verschiedener Diglycerolester handeln.

Bevorzugt eingesetzte Diglycerolester weisen einen HLB-Wert von mindestens 6, besonders bevorzugt 6 bis

12 auf, wobei unter dem HLB-Wert die sog. "hydrophilic-lipophilic balance" verstanden wird, die gemäß der Methode nach Griffin wie folgt berechnet wird:

$$HLB = 20 \text{ x } (1 - M_{lipophil}/M),$$

wobei $M_{lipophil}$ die Molmasse des lipophilen Anteils des Diglycerolesters ist und M die Molmasse des Diglycerolesters.

Die Menge an Diglycerolester beträgt 0,01 bis 3,0 Gew.-%, bevorzugt 0,15 bis 1,50 Gew.-%, weiter bevorzugt 0,20 bis 1,0 Gew.-%, besonders bevorzugt 0,2 bis 0,5 Gew.-%, bezogen auf die Gesamtzusammensetzung.

**Komponenten D**

Als Komponente D kann Graphit zugesetzt werden.

Sofern Graphit in den erfindungsmäßen thermoplastischen Zusammensetzungen eingesetzt wird, erfolgt dies in Mengen von 1,0 bis 20,0 Gew.-%, bevorzugt 3,0 bis 15,0 Gew.-%, weiter bevorzugt 5,0 bis 12,0 Gew.-%, besonders bevorzugt 5,0 bis 10 Gew.-%, ganz besonders bevorzugt 5,0 bis 7,5 Gew.-%. Bevorzugt wird die Zugabemenge des Graphites in den erfindungsmäßen Zusammensetzungen derart gewählt, dass die Zusammensetzungen elektrische Isolation als Kerneigenschaft zeigen. Unter elektrischer Isolation wird im nachfolgenden ein spezifischer Durchgangswiderstand > 1E+10 [Ohm·m], besonders bevorzugt > 1E+12 [Ohm·m] und ganz besonders bevorzugt > 1E+13 [Ohm·m], definiert.

Besonders bevorzugt werden expandierte Graphite, alleine oder in Mischung mit nicht expandiertem Graphit, verwendet. Bei den expandierten Graphiten sind die einzelnen Basalebenen des Graphits durch eine spezielle Behandlung auseinandergetrieben, wodurch eine Volumenvergrößerung des Graphits, bevorzugt um den Faktor 200 bis 400, resultiert. Die Herstellung von expandierten Graphiten ist unter anderem in den Schriften US 1,137,373 A, US 1,191,383 A sowie US 3,404,061 A beschrieben.

Graphite werden in Form von Fasern, Stäbchen, Kugeln, Hohlkugeln, Plättchen, in Pulverform, jeweils sowohl in aggregierter als auch in agglomerierter Form, bevorzugt in Plättchenform, in den Zusammensetzungen verwendet.

Unter der plättchenförmigen Struktur wird erfindungsgemäß ein Partikel verstanden, der eine flache Geometrie aufweist. So ist die Höhe der Partikel üblicherweise deutlich geringer im Vergleich zu der Breite oder Länge der Partikel. Derartige flache Partikel können wiederum zu Gebilden agglomeriert oder aggregiert sein.

Die Höhe der plättchenförmigen Primärpartikel beträgt weniger als 500 nm, bevorzugt weniger als 200 nm und besonders bevorzugt weniger als 100 nm. Durch die kleinen Größen dieser Primärpartikelkann die Form der Partikel gebogen, gekrümmt, gewellt oder andersartig deformiert sein.

Die Längendimensionen der Partikel können durch Standardmethoden, zum Beispiel die Elektronenmikroskopie, ermittelt werden.

Erfindungsgemäß bevorzugt wird ein Graphit mit einer relativ hohen spezifischen Oberfläche, ermittelt als BET-Oberfläche mittels Stickstoffadsorption nach ASTM D3037, verwendet. Bevorzugt werden Graphite mit einer BET-Oberfläche von ≥ 5 $m^2$/g, besonders bevorzugt ≥ 10 $m^2$/g und ganz besonders bevorzugt ≥ 18 $m^2$/g in den thermoplastischen Zusammensetzungen eingesetzt.

Sofern als zusätzlicher Füllstoff gemäß Komponente D expandierter Graphit enthalten ist, ist der D(0,5) des Graphits, bestimmt durch Siebanalyse gemäß DIN 51938 (DIN 51938:1994-07), bevorzugt ≤ 1,4 mm.

Bevorzugt haben die Graphite eine Partikelgrößenverteilung, welche durch den D(0,5) charakterisiert wird, von mindestens 800 μm, bevorzugt von mindestens 1000 μm, weiter bevorzugt von mindestens 12000 μm und noch weiter bevorzugt von mindestens 14000 μm.

Die Kennzahl D(0,5) wurde durch Siebanalyse in Anlehnung an DIN 51938 (DIN 51938:1994-07) ermittelt.

Die verwendeten Graphite haben eine Dichte, ermittelt mit Xylol, im Bereich von 2,0 g/$cm^3$ bis 2,4 g/$cm^3$, bevorzugt von 2,1 g/$cm^3$ bis 2,3 g/$cm^3$ sowie weiter bevorzugt von 2,2 g/$cm^3$ bis 2,27 g/$cm^3$.

Der Kohlenstoffgehalt der erfindungsgemäß verwendeten Graphite, ermittelt nach DIN 51903 (DIN 51903:2012-11) bei 800 °C für 20 Stunden, beträgt vorzugsweise ≥ 90 Gew.-%, weiter bevorzugt ≥ 95 Gew.-% und noch weiter bevorzugt ≥ 98 Gew.-%.

Der Restfeuchtigkeitsgehalt der erfindungsgemäß verwendeten Graphite, ermittelt nach DIN 51904 (DIN 51904:2012-11) bei 110 °C für 8 Stunden, beträgt vorzugsweise ≤ 5 Gew.-%, weiter bevorzugt ≤ 3 Gew.-% und noch weiter bevorzugt ≤ 2 Gew.-%.

Die thermische Leitfähigkeit der erfindungsgemäß verwendeten Graphite beträgt vor der Verarbeitung parallel zu den Basalebenen zwischen 250 und 400 W/(m·K) sowie senkrecht zu den Basalebenen zwischen 6 bis 8 W/(m·K).

Der elektrische Widerstand der erfindungsgemäß verwendeten Graphite beträgt vor der Verarbeitung parallel zu den Basalebenen ca. 0,001 Ohm·cm und ist senkrecht zu den Basalebenen kleiner 0,1 Ohm·cm.

Die Schüttdichte der Graphite, ermittelt nach DIN 51705 (DIN 51705:2001-06), beträgt üblicherweise zwischen 50 g/l und 250 g/l, bevorzugt zwischen 65 g/l und 220 g/l und weiter bevorzugt zwischen 100 g/l und 200 g/l.

Bevorzugt werden Graphite in den thermoplastischen Zusammensetzungen eingesetzt, welche einen Schwefelgehalt kleiner 200 ppm aufweisen.

Bevorzugt werden außerdem Graphite in den thermoplastischen Zusammensetzungen eingesetzt, welche einen auslaugfähigen Chlorionengehalt kleiner 100 ppm aufweisen.

Ebenfalls bevorzugt werden Graphite in den thermoplastischen Zusammensetzungen eingesetzt, welche einen Gehalt an Nitraten und Nitriten kleiner 50 ppm aufweisen.

Besonders bevorzugt werden Graphite eingesetzt, welche alle diese Grenzwerte, d.h. für den Schwefel-, den Chlorionen-, den Nitrat- und den Nitritgehalt, aufweisen.

Kommerziell verfügbare, in den erfindungsgemäßen Zusammensetzungen verwendbare Graphite sind unter anderem Ecophit® GFG 5, Ecophit® GFG 50, Ecophit® GFG 200, Ecophit® GFG 350, Ecophit® GFG 500, Ecophit® GFG 900, Ecophit® GFG 1200 von der Firma SGL Carbon GmbH, TIMREX® BNB90, TIMREX® KS5-44, TIMREX® KS6, TIMREX® KS150, TIMREX® SFG44, TIMREX® SFG150, TIMREX® C-THERM™ 001 und TIMREX® C-THERM™ 011 von der Firma TIMCAL Ltd., SC 20 O, SC 4000 O/SM und SC 8000 O/SM von der Graphit Kropfmühl AG, Mechano-Cond 1, Mechano-Lube 2 und Mechano-Lube 4G von der Firma H.C. Carbon GmbH, Nord-Min 251 und Nord-Min 560T von der Firma Nordmann Rassmann GmbH und ASBURY A99, Asbury 230U und Asbury 3806 von der Firma Asbury Carbons.

## Weitere Komponenten

Zusätzlich sind optional bis zu 10,0 Gew.-%, bevorzugt 0,10 bis 8,0 Gew.-%, besonders bevorzugt 0,2 bis 3,0 Gew.-% sonstige übliche Additive ("weitere Additive") enthalten.

Diese Gruppe umfasst Flammschutzmittel, Antitropfmittel, Thermostabilisatoren, Entformungsmittel, Antioxidantien, UV-Absorber, IR-Absorber, Antistatika, optische Aufheller, Lichtstreumittel, Farbmittel wie Pigmente, auch anorganischen Pigmente, Ruß und/oder Farbstoffe, die anorganischen Füllstoffe Titandioxid oder Bariumsulfat in den für Polycarbonat üblichen Mengen. Diese Additive können einzeln oder auch im Gemisch zugesetzt werden.

Die Gruppe der weiteren Additive umfasst keine Glasfasern, Quarze, Graphite, Bornitrid oder Bornitrid-Hybridmaterialien sowie sonstigen anorganischen Füllstoffe, da diese bereits von den Komponenten B und D erfasst sind. "Weitere Additive" sind auch keine Fließhilfsmittel aus der Gruppe der Diglycerolester, da diese bereits als Komponente C erfasst sind.

Solche Additive, wie sie üblicherweise bei Polycarbonaten zugesetzt werden, sind beispielsweise in EP-A 0 839 623, WO-A 96/15102, EP-A 0 500 496 oder "Plastics Additives Handbook", Hans Zweifel, 5th Edition 2000, Hanser Verlag, München beschrieben.

Bevorzugt ist die Zusammensetzung frei von zusätzlichen Entformungsmitteln, da der Diglycerolester selbst als Entformungsmittel wirkt.

Eine bevorzugte erfindungsgemäße thermoplastische Zusammensetzung enthält

(A) 27,6 bis 84,4 Gew.-% thermoplastisches Polymer, bevorzugt Polycarbonat,
(B) 15 bis 72 Gew.-% Bornitrid-Hybridmaterial,
(C) 0,2 bis 0,5 Gew.-% Diglycerolester und
(D) ggf. bis zu 10 Gew.-%, bevorzugt 5,0 bis 7,5 Gew.-% Graphit, bevorzugt expandierten Graphit.

Erfindungsgemäß besonders bevorzugt ist eine Zusammensetzung, die zusätzlich zu diesen Komponenten 0 bis 10 Gew.-% weitere Additive, sonst aber keine weiteren Komponenten, enthält.

Eine besonders bevorzugte Ausführungsform ist eine Zusammensetzung, enthaltend

(A) 27,6 bis 79,8 Gew.-% Polycarbonat,
(B) 15 bis 72 Gew.-% Bornitrid-Hybridmaterial, enthaltend

    B1) 25 bis 70 Gew.-%, bevorzugt 30 bis 65 Gew.-% Bornitrid,
    B2) 10 bis 70 Gew.-%, bevorzugt 15 bis 65 Gew.-% Zinkoxid,
    B3) ggf. 15 bis 25 Gew.-% Glasfüllstoff,
    B4) ggf. eine Schlichte,

(C) 0,2 bis 0,5 Gew.-% Diglycerolester und
(D) ggf. 5,0 bis 7,5 Gew.-% Graphit.

Erfindungsgemäß ganz besonders bevorzugt ist eine Zusammensetzung, die zusätzlich zu diesen Komponenten 0 bis 10 Gew.-% weitere Additive, wie zuvor definiert, sonst aber keine weiteren Komponenten, enthält.
Besonders bevorzugte erfindungsgemäße Zusammensetzungen sind solche, bestehend aus

A) 27,6 bis 79,8 Gew.-%, bevorzugt 55 bis 79,8 Gew.-% Polycarbonat,
B) 9 bis 35 Gew.-% Bornitrid-Hybridmaterial, enthaltend

B1) 30 bis 65 Gew.-% Bornitrid und

B2) 15 bis 65 Gew.-% Zinkoxid,

C) 0,3 bis 0,5 Gew.-% Diglycerolester, bevorzugt Diglycerolmonolaurylester,
D) 5,0 bis 10 Gew.-% expandierten Graphit,

ggf. weitere Additive, ausgewählt aus der Gruppe der Flammschutzmittel, Antitropfmittel, Thermostabilisatoren, Entformungsmittel, Antioxidantien, UV-Absorber, IR-Absorber, Antistatika, optischen Aufheller, Lichtstreumittel, Farbmittel wie Pigmente, auch anorganischen Pigmente, Ruß und/oder Farbstoffe, Titandioxid und/oder Bariumsulfat.
Alternativ besonders bevorzugte Zusammensetzungen sind solche, bestehend aus

A) 27,6 bis 79,8 Gew.-%, bevorzugt 55 bis 79,8 Gew.-% Polycarbonat,
B) 9 bis 35 Gew.-% Bornitrid-Hybridmaterial, enthaltend

B1) 25 bis 70 Gew.-% Bornitrid,
B2) 10 bis 70 Gew.-% Zinkoxid,
B3) 15 bis 25 Gew.-% Glasfüllstoff,
B4) ggf. einer Schlichte,

C) 0,3 bis 0,5 Gew.-% Diglycerolester, bevorzugt Diglycerolmonolaurylester,

und ggf. weitere Additive, ausgewählt aus der Gruppe der Flammschutzmittel, Antitropfmittel, Thermostabilisatoren, Entformungsmittel, Antioxidantien, UV-Absorber, IR-Absorber, Antistatika, optischen Aufheller, Lichtstreumittel, Farbmittel wie Pigmente, auch anorganischen Pigmente, Ruß und/oder Farbstoffe, Titandioxid und/oder Bariumsulfat.
Die Herstellung der erfindungsgemäßen Polymer-Zusammensetzungen, enthaltend die Komponenten A bis C und ggf. D sowie ggf. weitere Additive, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.
Es können auch Vormischungen aus Granulaten oder Granulaten und Pulvern mit den Komponenten B und C, ggf. D und/oder ggf. den weiteren Additiven verwendet werden.
Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.
Insbesondere können hierbei die Komponenten B und C und ggf. D sowie ggf. den weiteren Additiven der erfindungsgemäßen Zusammensetzung durch bekannte Verfahren oder als Masterbatch in das Polycarbonat eingebracht werden.
Die Verwendung von Masterbatchen ist zum Einbringen der Komponenten B und C und ggf. D und/oder den weiteren Additiven, einzeln oder in Mischung, bevorzugt.
Die erfindungsgemäßen thermoplastischen Zusammensetzungen können in bekannter Weise aufgearbeitet und zu beliebigen Formkörpern verarbeitet werden.
In diesem Zusammenhang kann die erfindungsgemäße Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.
Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.
Erfindungsgemäße Zusammensetzungen sind zur Herstellung von Komponenten einer elektrischen oder elektronischen Baugruppe, einem Motorenteil oder eines Wärmetauschers wie beispielsweise Lampenfassungen, Wärmesenken und Kühler bzw. Kühlkörper für Platinen geeignet.

Bevorzugt werden erfindungsgemäße Zusammensetzungen für die Herstellung von Wärmetauschern, wie beispielsweise Wärmesenken und Kühlkörpern, eingesetzt.

## Beispiele

### 1. Beschreibung der Rohstoffe und Prüfmethoden

Die erfindungsgemäßen Polycarbonatzusammensetzungen wurden auf üblichen Maschinen, wie beispielsweise Mehrwellenextrudern, durch Compoundierung, gegebenenfalls unter Zugabe von Additiven und anderen Zuschlagstoffen, bei Temperaturen zwischen 300°C und 330°C hergestellt.

Die erfindungsgemäßen Compounds zu den folgenden Beispielen wurden auf einem Extruder ZE 25 der Fa. Berstorff mit einem Durchsatz von 10 kg/h. hergestellt. Die Schmelzetemperatur betrug 315 °C.

Es wurden als Polycarbonatbasis A Mischungen aus den Komponenten A-1 und A-2 eingesetzt.

**Komponente A-1:**

Lineares Polycarbonat auf Basis von Bisphenol A mit einer Schmelze-Volumenfließrate MVR von 19,0 $cm^3$/10 min (gemäß ISO 1133 (DIN EN ISO 1133-1:2012-03), bei einer Prüftemperatur 300°C und 1,2 kg Belastung).

**Komponente A-2:**

Lineares Polycarbonat in Pulverform auf Basis von Bisphenol A mit einer Schmelze-Volumenfließrate MVR von 19,0 $cm^3$/10 min (gemäß ISO 1133 (DIN EN ISO 1133-1:2012-03), bei einer Prüftemperatur von 300°C und 1,2 kg Belastung).

**Komponente B-1:**

CoolFX-1022 Hybridfüllstoff von Momentive Performance Materials enthaltend ca. 30,0 Gew.-% Bornitrid, ca. 65,0 Gew.-% Zinkoxid und ca. 5,0 Gew.-% einer Schlichte basierend auf einem Organosilan.

**Komponente B-2:**

CoolFX-1035 Hybridfüllstoff von Momentive Performance Materials enthaltend ca. 65,0 Gew.-% Bornitrid, ca. 15,0 Gew.-% Zinkoxid, ca. 15,0 Gew.-% Glasfaser und ca. 5,0 Gew.-% einer Schlichte basierend auf einem Organosilan.

**Komponente C-1:**

Poem DL-100 (Diglycerolmonolaurat) der Fa. Riken Vitamin als Fließhilfsmittel.

**Komponente C-2:**

Bisphenol-A-diphosphat Reofos® BAPP von Chemtura Corporation als Fließhilfsmittel.

**Komponente D-3:**

Expandierter Graphit Ecophit® GFG 1200 von der Firma SGL Carbon GmbH mit einem D(0,5) von 1200 μm.

**Komponente E-1:**

Kaliumperfluor-1-butansulfonat, kommerziell erhältlich als Bayowet® C4 der Firma Lanxess in Leverkusen, CAS-Nr. 29420-49-3.

**Komponente E-2:**

Polytetrafluorethylen Blendex® B449 (ca. 50 Gew.-% PTFE und ca. 50 Gew.-% SAN [aus 80 Gew.-% Styrol und 20 Gew.-% Acrylnitril]) der Firma Chemtura Corporation.

Die Vicat-Erweichungstemperatur VST/B50 als Maß für die Wärmeformbeständigkeit wurde gemäß ISO 306 (ISO 306:2013-11) an Prüfkörpern der Abmessung 80 mm x 10 mm x 4 mm mit einer Stempellast von 50 N und einer Aufheizgeschwindigkeit von 50°C/h mit dem Gerät Coesfeld Eco 2920 der Firma Coesfeld Materialtest bestimmt.

Das E-Modul wurde gemäß EN ISO 527-1 und -2 an einseitig angespritzten Schulterstäben mit einem Kern der Dimension 80 mm x 10 mm x 4 mm bei einer Vorschubgeschwindigkeit von 1 m/min gemessen.

Die Bestimmung des Schmelze-Volumenfließrate (MVR) erfolgte nach ISO 1133 (DIN EN ISO 1133-1:2012-03, bei einer Prüftemperatur von 300 °C, Masse 2,16 kg, 4 min) mit dem Gerät Zwick 4106 der Firma Zwick Roell.

Die Wärmeleitfähigkeit in Spritzgussrichtung (in-plane) bei 23°C wurde bestimmt gemäß ASTM E 1461 (ASTM E 1461:2013) an Proben mit der Dimension von 80 mm x 80 mm x 2 mm.

Die Wärmeleitfähigkeit in Spritzgussrichtung (through-plane) bei 23°C wurde bestimmt gemäß ASTM E 1461 (ASTM E 1461:2013) an Proben mit der Dimension von 80 mm x 80 mm x 2 mm.

Der spezifische Durchgangswiderstand wurde nach DIN 60093 (DIN IEC 60093:1993-12) ermittelt.

**2. Zusammensetzungen und deren Eigenschaften**

Nicht ermittelte Ergebnisse sind durch "n.b." (nicht bestimmt) gekennzeichnet.

**Tabelle 1**

| Komponente | | | V1 | B1 | B2 |
|---|---|---|---|---|---|
| A-1 | Gew.-% | | 67,0 | 66,7 | 66,5 |
| A-2 | Gew.-% | | 3,0 | 3,0 | 3,0 |
| B-1 | Gew.-% | | 30,0 | 30,0 | 30,0 |
| C-1 | Gew.-% | | 0 | 0,3 | 0,5 |
| Ergebnisse | | | | | |
| MVR | ISO 1133 | $cm^3$/[10 min] | 36,4 | 82,3 | n.b. [c] |
| E-Modul | ISO 527 | GPa | 3,8 | 4,0 | 4,0 |
| Vicat - VST/B50 | ISO 306 | °C | 142,4 | 136,9 | 133,8 |
| Wärmeleitfähigkeit | in-plane | W/[m*K] | 0,8 | 0,7 | 0,8 |
| Wärmeleitfähigkeit | through-plane | W/[m*K] | 0,4 | 0,4 | 0,4 |
| c bedeutet, dass die MVR-Messung nicht möglich war, da das Material für eine Charakterisierung zu niedrigviskos war | | | | | |

Tabelle 1 verdeutlicht, dass der Zusatz von Diglycerolester, Komponente C-1, zu einem Gemisch aus den Komponenten A und B-1 eine deutliche Verbesserung der Fließfähigkeit bewirkt. Komponente B-1 enthält hierbei ca. 30,0 Gew.-% Bornitrid und ca. 65,0 Gew.-% Zinkoxid und erreicht Wärmeleitfähigkeiten (in-plane) von ca. 0,8 W/[m*K]. Das E-Modul ist unabhängig von der Zugabe der Komponente C-1. Die Wärmeformbeständigkeit sinkt nur geringfügig mit zunehmendem Gehalt an Komponente C-1 und verbleibt auf einem ausreichend hohen Niveau.

**Tabelle 2**

| Komponente | | | B3 | B4 | B5 | B6 | B7 | B8 | B9 |
|---|---|---|---|---|---|---|---|---|---|
| A-1 | Gew.-% | | 60,8 | 42,8 | 24,8 | 24,7 | 60,6 | 42,6 | 24,6 |
| A-2 | Gew.-% | | 3,0 | 3,0 | 3,0 | 3,0 | 3,0 | 3,0 | 3,0 |
| B-1 | Gew.-% | | 36,0 | 54,0 | 72,0 | 72,0 | 36,0 | 54,0 | 72,0 |
| C-1 | Gew.-% | | 0,2 | 0,2 | 0,2 | 0,3 | 0,4 | 0,4 | 0,4 |
| Ergebnisse | | | | | | | | | |
| MVR | ISO 1133 | $cm^3$/[10 min] | 75,1 | 39,3 | 84,1[b] | 106,8 | 94,1 | 56,9 | n.b. [c] |
| E-Modul | ISO 527 | GPa | 4,5 | 6,9 | 12,2 | 12,3 | 4,6 | 7,1 | 12,8 |
| Vicat - VST/B50 | ISO 306 | °C | 136,8 | 133,7 | 126,8 | 122,6 | 134,0 | 128,5 | 119,1 |

(fortgesetzt)

| Komponente | | | B3 | B4 | B5 | B6 | B7 | B8 | B9 |
|---|---|---|---|---|---|---|---|---|---|
| Wärmeleitfähigkeit | in-plane | W/[m*K] | 1,1 | 2,2 | 4,9 | 6,2 | 1,0 | 2,2 | 5,6 |
| Wärmeleitfähigkeit | through-plane | W/[m*K] | 0,4 | 0,7 | 1,2 | 1,3 | 0,4 | 0,7 | 1,2 |
| b bedeutet, dass die MVR-Messung mit 10,00 kg anstelle von 2,16 kg durchgeführt wurde;<br>c bedeutet, dass die MVR-Messung nicht möglich war, da das Material für eine Charakterisierung zu niedrigviskos war | | | | | | | | | |

Tabelle 2 verdeutlicht, dass der Zusatz von Komponente C-1, Digylcerolester, zu einem Gemisch aus den Komponenten A und B-1 eine deutliche Verbesserung der Fließfähigkeit bewirkt, wobei der Effekt auch bei hohen Gehalten von Komponente B-1 sichtbar ist. Das E-Modul sowie die Wärmeleitfähigkeit sind unabhängig von der Zugabe der Komponente C-1 und werden nur durch den Gehalt der Komponente B-1 bestimmt. Die Wärmeformbeständigkeit wird durch die Zugabe der Komponente C-1 nur geringfügig beeinflusst.

**Tabelle 3**

| Komponente | | | B10 | B11 | B12 | B13 | B14 | B15 | B16 | B17 | B18 |
|---|---|---|---|---|---|---|---|---|---|---|---|
| A-1 | Gew.-% | | 81,4 | 73,7 | 66,0 | 58,3 | 58,2 | 81,2 | 73,5 | 65,8 | 58,1 |
| A-2 | Gew.-% | | 3,0 | 3,0 | 3,0 | 3,0 | 3,0 | 3,0 | 3,0 | 3,0 | 3,0 |
| B-2 | Gew.-% | | 15,4 | 23,1 | 30,8 | 38,5 | 38,5 | 15,4 | 23,1 | 30,8 | 38,5 |
| C-1 | Gew.-% | | 0,2 | 0,2 | 0,2 | 0,2 | 0,3 | 0,4 | 0,4 | 0,4 | 0,4 |
| Ergebnisse | | | | | | | | | | | |
| MVR | ISO 1133 | $cm^3$/[10 min] | 36,8 | 32,7 | 25,0 | 16,0 | 21,8 | 64,9 | 50,9 | 47,2 | 33,9 |
| E-Modul | ISO 527 | GPa | 3,9 | 5,1 | 6,5 | 8,0 | 8,4 | 4,0 | 5,2 | 6,7 | 8,2 |
| Vicat - VST/B50 | ISO 306 | °C | 144,4 | 144,5 | 142,5 | 142,0 | 141,4 | 140,1 | 140,0 | 138,0 | 135,0 |
| Wärmeleitfähigkeit | in-plane | W/[m*K] | 0,6 | n.b. | 1,5 | 2,2 | 2,4 | 0,6 | 1,0 | 1,6 | 2,6 |
| Wärmeleitfähigkeit | through-plane | W/[m*K] | 0,3 | n.b. | 0,4 | 0,5 | 0,5 | 0,3 | 0,4 | 0,4 | 0,6 |

Tabelle 3 verdeutlicht, dass der Zusatz von Komponente C-1, Diglycerolester, zu einem Gemisch aus den Komponenten A und B-2 eine deutliche Verbesserung der Fließfähigkeit bewirkt. Komponente B-2 enthält hierbei ca. 65,0 Gew.-% Bornitrid, 15,0 Gew.-% Zinkoxid sowie 15,0 Gew.-% Glasfaser und erreicht Wärmeleitfähigkeiten (in-plane) von bis zu 2,6 W/[m*K]. Das E-Modul ist unabhängig von der Zugabe der Komponente C-1. Die Wärmeformbeständigkeit sinkt geringfügig mit zunehmendem Gehalt an Komponente C-1, verbleibt aber auf einem ausreichend hohen Niveau.

**Tabelle 4**

| Komponente | | | V2 | B19 | B20 | V3 | V4 | V5 |
|---|---|---|---|---|---|---|---|---|
| A-1 | Gew.-% | | 66,5 | 66,2 | 66,0 | 61,5 | 59,5 | 56,5 |
| A-2 | Gew.-% | | 3,0 | 3,0 | 3,0 | 3,0 | 3,0 | 3,0 |
| B-2 | Gew.-% | | 30,0 | 30,0 | 30,0 | 30,0 | 30,0 | 30,0 |
| C-1 | Gew.-% | | 0,0 | 0,3 | 0,5 | 0,0 | 0,0 | 0,0 |
| C-2 | Gew.-% | | 0,0 | 0,0 | 0,0 | 5,0 | 7,0 | 10,0 |
| E-1 | Gew.-% | | 0,2 | 0,2 | 0,2 | 0,2 | 0,2 | 0,2 |
| E-2 | Gew.-% | | 0,3 | 0,3 | 0,3 | 0,3 | 0,3 | 0,3 |
| Ergebnisse | | | | | | | | |
| MVR | ISO 1133 | $cm^3$/[10min] | 13,2 | 33,5 | 66,6 | 20,3 | 27,1 | 41,4 |
| E-Modul | ISO 527 | GPa | 6,0 | 6,2 | 6,5 | 6,6 | 6,6 | 6,3 |
| Vicat - VST/B50 | ISO 306 | °C | 144,1 | 135,3 | 132,4 | 122,7 | 114,3 | 102,4 |
| Wärmeleitfähigkeit | in-plane | W/[m*K] | 1,4 | 1,5 | 1,5 | 1,4 | 1,5 | 1,5 |
| Wärmeleitfähigkeit | through-plane | W/[m*K] | 0,4 | 0,4 | 0,4 | 0,4 | 0,4 | 0,4 |

Tabelle 4 verdeutlicht, dass im Vergleich zu Komponente C-2, Bisphenol-A-diphosphat, die Komponente C-1, Diglycerolester, schon bei geringen Mengen einen deutlichen Einfluss auf die Fließfähigkeit der Zusammensetzungen zeigt. Zusammensetzungen, enthaltend Komponente C-2, bedürfen deutlich höherer Gehalte und erreichen trotzdem nicht das MVR-Niveau der Zusammensetzungen mit Komponente C-1. Des Weiteren führt der Zusatz der Komponente C-2 in oben angeführten Zusammensetzungen zu einer zu ausgeprägten Absenkung der Wärmeformbeständigkeit, welche den Einsatz in der E/E (Elektro/Elektronik)- sowie IT (Informationstechnik)-Industrie erschwert bzw. nicht ermöglicht.

**Tabelle 5**

| Komponente | | | B21 | V6 | B22 | V7 | B23 |
|---|---|---|---|---|---|---|---|
| A-1 | Gew.-% | | 55,5 | 53,0 | 53,0 | 50,5 | 50,0 |
| A-2 | Gew.-% | | 3,0 | 3,0 | 3,0 | 3,0 | 3,0 |
| B-1 | Gew.-% | | 36,0 | 36,0 | 36,0 | 36,0 | 36,0 |
| C-1 | Gew.-% | | 0,5 | 0,0 | 0,5 | 0,0 | 0,5 |
| D-3 | Gew.-% | | 5,0 | 7,5 | 7,5 | 10,0 | 10,0 |
| E-1 | Gew.-% | | 0,0 | 0,2 | 0,0 | 0,2 | 0,2 |
| E-2 | Gew.-% | | 0,0 | 0,3 | 0,0 | 0,3 | 0,3 |
| Ergebnisse | | | | | | | |
| MVR | ISO 1133 | $cm^3$/[10 min] | 57,5 | 6,2 | 30,5 | 3,4 | 18,4 |
| E-Modul | ISO 527 | GPa | 4,9 | 4,9 | 5,6 | 5,6 | 5,6 |
| Vicat - VST/B50 | ISO 306 | °C | 129,4 | 142,1 | 130,3 | 141,3 | 126,5 |
| Wärmeleitfähigkeit | in-plane | W/[m*K] | 2,5 | 4,2 | 4,5 | 6,0 | 4,2 |
| Wärmeleitfähigkeit | through-plane | W/[m*K] | 0,7 | 0,8 | 0,8 | 0,9 | 0,8 |

(fortgesetzt)

| Komponente | | | B21 | V6 | B22 | V7 | B23 |
|---|---|---|---|---|---|---|---|
| Spez. Durchgangswiderstand | DIN 60093 | Ohm*m | 1,5E+13 | 1,2E+13 | 1,6E+12 | 9,0E+09 | 7,8E+04 |

Tabelle 5 zeigt, dass der Zusatz von Komponente C-1 auch bei zusätzlich Graphit-, Komponente D-3, enthaltenden Zusammensetzungen eine Fließverbesserung ohne nennenswerte Auswirkungen auf die Wärmeleitfähigkeit und das E-Modul der Zusammensetzung B21 und B22 bewirkt. Die Wärmeformbeständigkeit sinkt geringfügig mit zunehmendem Gehalt an Komponente C-1, diese verbleibt aber auf einem ausreichend hohen Niveau.

Die Betrachtung des spezifischen Durchgangswiderstands zeigt auf, dass bei Zusatz der Komponente D-3 mit einem Gehalt von 10,0 Gew.-% der Zusatz an BN bevorzugt limitiert ist, da diese Zusammensetzungen elektrisch leitfähig sind.

## Patentansprüche

1. Thermoplastische Zusammensetzung, enthaltend

   (A) mindestens ein thermoplastisches Polymer,
   (B) mindestens ein Bornitrid-Hybridmaterial,
   (C) mindestens ein Fließhilfsmittel, ausgewählt aus der Gruppe der Diglycerolester.

2. Thermoplastische Zusammensetzung nach Anspruch 1, **dadurch gekennzeichnet, dass** als Diglycerolester ein Ester der Formel (I)

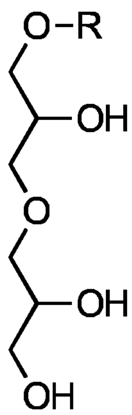

(I)

   mit R = $COC_nH_{2n+1}$ und/oder R = COR',
   wobei n eine ganze Zahl ist und wobei R' ein verzweigter Alkylrest oder ein verzweigter oder unverzweigter Alkenylrest ist und $C_nH_{2n+1}$ ein aliphatischer, gesättigter linearer Alkylrest ist, enthalten ist.

3. Thermoplastische Zusammensetzung nach Anspruch 1 oder 2, **dadurch gekennzeichnet, dass** R = $COC_nH_{2n+1}$ ist, wobei n eine ganze Zahl von 6-24, bevorzugt 8 bis 18, weiter bevorzugt 10 bis 16, besonders bevorzugt 12 ist.

4. Thermoplastische Zusammensetzung nach einem der vorhergehenden Ansprüche, **dadurch gekennzeichnet, dass** die Zusammensetzung

   (A) 27,6 bis 84,4 Gew.-% thermoplastisches Polymer,
   (B) 15 bis 72 Gew.-% Bornitrid-Hybridmaterial und
   (C) 0,2 bis 0,5 Gew.-% Diglycerolester enthält.

5. Thermoplastische Zusammensetzung nach einem der Ansprüche 1 bis 4, **dadurch gekennzeichnet, dass** die Zusammensetzung

(A) 27,6 bis 79,8 Gew.-% thermoplastisches Polymer,
(B) 15 bis 72 Gew.-% Bornitrid-Hybridmaterial,
(C) 0,2 bis 0,5 Gew.-% Diglycerolester und
(D) ggf. 5,0 bis 10 Gew.-% Graphit enthält.

**6.** Thermoplastische Zusammensetzung nach einem der vorhergehenden Ansprüche, **dadurch gekennzeichnet, dass** das thermoplastische Polymer Polycarbonat ist.

**7.** Thermoplastische Zusammensetzung nach Anspruch 5 oder 6, **dadurch gekennzeichnet, dass** die Zusammensetzung als Komponente D 5,0 bis 10 Gew.-% expandierten Graphit enthält.

**8.** Thermoplastische Zusammensetzung nach einem der vorhergehenden Ansprüche, **dadurch gekennzeichnet, dass** das Bornitrid-Hybridmaterial Bornitrid und Zinkoxid enthält.

**9.** Thermoplastische Zusammensetzung nach einem der vorhergehenden Ansprüche, **dadurch gekennzeichnet, dass** das Bornitrid-Hybridmaterial Glasfüllstoff enthält.

**10.** Thermoplastische Zusammensetzung nach einem der vorhergehenden Ansprüche, **dadurch gekennzeichnet, dass** das Bornitrid-Hybridmaterial

B1) 25 bis 70 Gew.-% Bornitrid,
B2) 10 bis 70 Gew.-% Zinkoxid,
B3) ggf. 15 bis 25 Gew.-% Glasfüllstoff,
B4) ggf. eine Schlichte

enthält.

**11.** Thermoplastische Zusammensetzung nach einem der vorhergehenden Ansprüche, **dadurch gekennzeichnet, dass** der Anteil an Bornitrid, bezogen auf die gesamte thermoplastische Zusammensetzung, 9 bis 25 Gew.-% beträgt.

**12.** Formteil, hergestellt aus einer thermoplastischen Zusammensetzung nach einem der vorhergehenden Ansprüche.

**13.** Formteil nach Anspruch 12, **dadurch gekennzeichnet, dass** das Formteil eine Wärmesenke oder ein Kühlkörper ist.

## Claims

**1.** Thermoplastic composition comprising

(A) at least one thermoplastic polymer,
(B) at least one hybrid boron nitride material,
(C) at least one flow enhancer selected from the group of the diglycerol esters.

**2.** Thermoplastic composition according to Claim 1, **characterized in that** the diglycerol ester present is an ester of the formula (I)

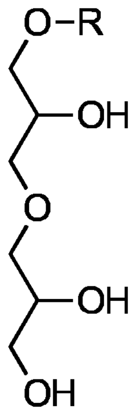

(I)

with R = $COC_nH_{2n+1}$ and/or R = COR',
where n is an integer and where R' is a branched alkyl moiety or a branched or unbranched alkenyl moiety and $C_nH_{2n+1}$ is an aliphatic, saturated linear alkyl moiety.

**3.** Thermoplastic composition according to Claim 1 or 2, **characterized in that** R = $COC_nH_{2n+1}$ where n is an integer of 6-24, preferably 8 to 18, further preferably 10 to 16, especially preferably 12.

**4.** Thermoplastic composition according to any of the preceding claims, **characterized in that** the composition comprises

(A) 27.6% to 84.4% by weight of thermoplastic polymer,
(B) 15% to 72% by weight of hybrid boron nitride material and
(C) 0.2% to 0.5% by weight of diglycerol esters.

**5.** Thermoplastic composition according to any of Claims 1 to 4, **characterized in that** the composition comprises

(A) 27.6% to 79.8% by weight of thermoplastic polymer,
(B) 15% to 72% by weight of hybrid boron nitride material,
(C) 0.2% to 0.5% by weight of diglycerol esters and
(D) optionally 5.0% to 10% by weight of graphite.

**6.** Thermoplastic composition according to any of the preceding claims, **characterized in that** the thermoplastic polymer is polycarbonate.

**7.** Thermoplastic composition according to Claim 5 or 6, **characterized in that** the composition comprises, as component D, 5.0% to 10% by weight of expanded graphite.

**8.** Thermoplastic composition according to any of the preceding claims, **characterized in that** the hybrid boron nitride material comprises boron nitride and zinc oxide.

**9.** Thermoplastic composition according to any of the preceding claims, **characterized in that** the hybrid boron nitride material comprises glass filler.

**10.** Thermoplastic composition according to any of the preceding claims, **characterized in that** the hybrid boron nitride material comprises

B1) 25% to 70% by weight of boron nitride,
B2) 10% to 70% by weight of zinc oxide,
B3) optionally 15% to 25% by weight of glass filler,
B4) optionally a sizing agent.

**11.** Thermoplastic composition according to any of the preceding claims, **characterized in that** the proportion of boron nitride, based on the overall thermoplastic composition, is 9% to 25% by weight.

**12.** Moulding produced from a thermoplastic composition according to any of the preceding claims.

**13.** Moulding according to Claim 12, **characterized in that** the moulding is a heat sink or a cooling "body.

**Revendications**

**1.** Composition thermoplastique, contenant

(A) au moins un polymère thermoplastique,
(B) au moins une substance hybride à base de nitrure de bore,
(C) au moins un adjuvant fluidifiant, choisi dans le groupe des esters de diglycérol.

**2.** Composition thermoplastique selon la revendication 1, **caractérisée en ce qu'**en tant qu'ester de diglycérol est contenu un ester de formule (I)

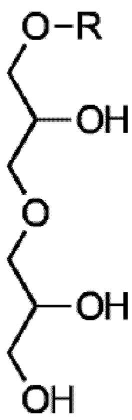
(I)

où R = $COC_nH_{2n+1}$ et/ou R = COR',
n étant un nombre entier et R' étant un radical alkyle ramifié ou un radical alcényle ramifié ou non ramifié et $C_nH_{2n+1}$ étant un radical alkyle aliphatique saturé linéaire.

**3.** Composition thermoplastique selon la revendication 1 ou 2, **caractérisée en ce que** R = $COC_nH_{2n+1}$, n étant un nombre entier valant de 6 à 24, de préférence de 8 à 18, encore mieux de 10 à 16, de façon particulièrement préférée égal à 12.

**4.** Composition thermoplastique selon l'une quelconque des revendications précédentes, **caractérisée en ce que** la composition contient

(A) 27,6 à 84,4 % en poids de polymère thermoplastique,
(B) 15 à 72 % en poids de substance hybride à base de nitrure de bore et
(C) 0,2 à 0,5 % en poids d'ester de diglycérol.

**5.** Composition thermoplastique selon l'une quelconque des revendications 1 à 4, **caractérisée en ce que** la composition contient

(A) 27,6 à 79,8 % en poids de polymère thermoplastique,
(B) 15 à 72 % en poids de substance hybride à base de nitrure de bore,
(C) 0,2 à 0,5 % en poids d'ester de diglycérol et
(D) éventuellement 5,0 à 10 % en poids de graphite.

**6.** Composition thermoplastique selon l'une quelconque des revendications précédentes, **caractérisée en ce que** le polymère thermoplastique est un polycarbonate.

**7.** Composition thermoplastique selon la revendication 5 ou 6, **caractérisée en ce que** la composition contient en tant

que composant D 5,0 à 10 % en poids de graphite expansé.

**8.** Composition thermoplastique selon l'une quelconque des revendications précédentes, **caractérisée en ce que** la substance hybride à base de nitrure de bore contient du nitrure de bore et de l'oxyde de zinc.

**9.** Composition thermoplastique selon l'une quelconque des revendications précédentes, **caractérisée en ce que** la substance hybride à base de nitrure de bore contient une charge de verre.

**10.** Composition thermoplastique selon l'une quelconque des revendications précédentes, **caractérisée en ce que** la substance hybride à base de nitrure de bore contient

B1) 25 à 70 % en poids de nitrure de bore,
B2) 10 à 70 % en poids d'oxyde de zinc,
B3) éventuellement 15 à 25 % en poids de charge de verre,
B4) éventuellement un agent de couplage.

**11.** Composition thermoplastique selon l'une quelconque des revendications précédentes, **caractérisée en ce que** la proportion de nitrure bore, par rapport à la composition thermoplastique totale, vaut de 9 à 25 % en poids.

**12.** Pièce moulée, produite à partir d'une composition thermoplastique selon l'une quelconque des revendications précédentes.

**13.** Pièce moulée selon la revendication 12, **caractérisé en ce que** la pièce moulée est un puits de chaleur ou un dissipateur thermique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2008153959 A1
- US 7723419 B1
- US 20120217434 A1
- US 2014077125 A
- US 2999835 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A1
- WO 2004063249 A1
- WO 200105866 A1
- WO 2000105867 A
- US 5340905 A
- US 5097002 A
- US A5717057 A
- US 6652822 B2
- US 20010021740 A1
- US 5898009 A
- US 6048511 A
- US 20050041373 A1
- US 20040208812 A1
- US 6951583 B2
- WO 2008042446 A2
- US 20140077125 A1
- US 1137373 A
- US 1191383 A
- US 3404061 A
- EP 0839623 A
- WO 9615102 A
- EP 0500496 A


### In der Beschreibung aufgeführte Nicht-Patentliteratur


- **H. SCHNELL.** Chemistry and Physics of Polycarbonates. Interscience Publishers, 1964, 28 ff-102 ff
- **D.G. LEGRAND ; J.T. BENDLER.** Handbook of Polycarbonate Science and Technology. Marcel Dekker, 2000, 72ff
- **HANS ZWEIFEL.** Plastics Additives Handbook. Hanser Verlag, 2000